# EUROPEAN PATENT SPECIFICATION

(11) **EP 2 127 978 B1**
(45) Date of publication and mention of the grant of the patent: **26.12.2012**
(21) Application number: 08703748.7
(22) Date of filing: 17.01.2008
(51) Int. Cl.: B60T 13/569, F16J 3/04

(54) **NEGATIVE PRESSURE BOOSTER AND BRAKE BOOSTER USING THE SAME**
UNTERDRUCKVERSTÄRKER UND DIESEN VERWENDENDER BREMSKRAFTVERSTÄRKER
SURPRESSEUR DE PRESSION NÉGATIVE ET SERVOFREIN UTILISANT LE SURPRESSEUR

(30) Priority: 23.01.2007 JP 2007012337
(43) Date of publication of application: 02.12.2009
(73) Proprietor: Bosch Corporation, Tokyo 150-8360 (JP)
(72) Inventor: MORI, Yasushi, Higashimatsuyama-Shi Saitama 355-8602 (JP)
(74) Representative: Knapp, Thomas
(86) International application number: PCT/JP2008/050918
(87) International publication number: WO 2008/090933

(56) References cited:
- JP-A- 05 193 485
- JP-A- 63 008 064
- JP-U- 60 128 855
- US-A- 4 716 814

## Description

### Background Art

The present invention relates in general to a technical field of a negative pressure booster configured to boost an input by a negative pressure at a predetermined servo ratio to generate a large output and a brake booster using the same and, more specifically, to a technical field of a negative pressure booster configured to be able to restrain a noise generated by atmosphere flowing in during operation and a brake booster. In the descriptions in claims and the description of the present invention, the relation in direction between the front and the rear is determined such that "front" is a direction in which an input shaft moves when the negative pressure booster is in operation, and "rear" is a direction in which the input shaft returns when the operation is canceled.

In particular, the present invention relates to a negative pressure booster according to the preamble of claim 1. Such a negative pressure booster is known from the document US 4,716,814.

In the related art, a fact that a negative pressure booster using a negative pressure is used in a brake booster in a brake system for a vehicle such as a passenger car is also known by a patent publication JP-A-5-193485. In addition to the negative pressure booster disclosed in JP-A-5-193485, a general negative pressure booster in the related art is sectionalized into a constant pressure chamber in which the negative pressure is introduced by a power piston under the normal condition and a variable pressure chamber in which a pressure varies. Then, at the time of normal braking operation by a normal depression of a brake pedal, a control valve is switched by an advance of an input shaft, and atmosphere is introduced in the variable pressure chamber. Then, a pressure difference is generated between the variable pressure chamber and the constant pressure chamber, and hence the power piston moves ahead, so that the negative pressure booster boosts an input from the input shaft (that is, a pedal depressing force) by a predetermined servo ratio and outputs the same. The output from the negative pressure booster causes a master cylinder to generate a master cylinder pressure, and the master cylinder pressure activates a wheel cylinder, whereby the brake is normally activated.

When the negative pressure booster is in operation, atmosphere flows into the variable pressure chamber through a valve body of the negative pressure booster. However, in the valve body, many components such as the input shaft, a valve plunger, the control valve, and a control spring are present and the shape of an atmosphere inlet passage in the valve body is relatively complicated. Therefore, when the atmosphere flows in, an inflow noise may occur. In particular, since the atmosphere flows rapidly and instantaneously inward when the negative pressure booster is in operation, the inflow noise is significantly large. When the inflow noise is generated as described above, when the negative pressure booster is used as the brake booster, the atmosphere flowing into the negative pressure booster during operation is air in a cabin of a motor vehicle, the inflow noise is transmitted to the interior of the cabin.

Therefore, in general negative pressure boosters including the negative pressure booster disclosed in JP-A-5-193485 and including US 4,716,814, a noise absorbing member (silencer) is provided in the atmosphere inlet passage in the vicinity of an atmospheric air suction port in the valve body which stores and supports the control valve, and resistance is provided to the flow of the atmosphere by the noise absorbing member, so that the flow-in velocity of the atmosphere flowing into the variable pressure chamber is reduced to prevent generation of the inflow noise.

Also, in the general negative pressure boosters in the related art, a boot having an accordion portion is provided between a rear shell and the input shaft so as to be expandable and contractible in order to prevent contamination such as foreign substances included in the atmosphere from entering the valve body together with the atmosphere when the atmosphere flows into the valve body. The boot is formed with atmosphere inlet ports for allowing introduction of the atmosphere therethrough during operation. In addition, also in order to prevent the contamination in the atmosphere from entering the valve body, a filter formed of soft material such as sponge is provided adjacently to the noise absorbing member (silencer) so as to be supported by the boot.

However, when the resistance is provided to the flow of atmosphere by the noise absorbing member in the valve body, responsiveness of the negative pressure booster is lowered correspondingly. In addition, when the noise absorbing member is provided, the number of points of club fee is increased, and hence there arises a problem of cost increase. Therefore, more effective prevention of the inflow noise of the atmosphere while maintaining the good responsiveness without the silencer without providing the noise absorbing member in the atmosphere inlet passage is desired. Then, when the negative pressure booster is used as the brake booster, prevention of noise in the cabin as much as possible is desired more and more strongly in order to accommodate the demand of quietness and comfortableness of the vehicle in recent years.

In contrast, the accordion portion of the boot is expanded and contracted across a large range by the input shaft advancing significantly forward respect to the rear shell during operation. An elastically restoring force of the accordion portion of the boot is set to a relatively large value in order to ensure returning of the boot when the operation of the negative pressure booster is cancelled. Therefore, when the accordion portion of the boot is expanded and contracted during operation, the elastically restoring force of the accordion portion is increased. Therefore, a rear end portion of the boot supported by the input shaft is pressed by the elastically restoring force and hence is deformed, so that the atmosphere inlet ports formed at the rear end portion of the boot are collapsed. Therefore, there is a risk of generation of noise due to the turbulence of the atmosphere flow when the atmosphere flows through the atmosphere inlet ports.

Also, the soft filter supported by the boot and is supported by the input shaft via the rear end portion of the boot is also deformed by being pressed by the elastically restoring force of the accordion portion, so that there arises problems of not only impairment of a contamination removing function of the filter, but also lowering of the responsiveness.

### Disclosure of the Invention

It is an object of the present invention to provide an inexpensive negative pressure booster which is capable of preventing an inflow noise of atmosphere during operation further effectively while maintaining a good responsiveness and, in addition is capable of satisfactorily maintaining a contamination removing function of a filter and a brake booster using the same.

This objective is achieved by the negative pressure booster according to claim 1.

In order to achieve the object described above, a negative pressure booster according to the present invention at least includes: an input shaft which is applied with input; a valve body disposed so as to be capable of moving forward and backward with respect to the rear shell; a power piston provided in the valve body for sectionalizing a space between a front shell and the rear shell into a constant pressure chamber in which a negative pressure is introduced, and a variable pressure chamber in which the atmosphere is introduced during operation; an output shaft connected to the valve body for outputting an output generated by the power piston and being boosted from the input via the valve body; a valve plunger connected to the input shaft and disposed in the valve body so as to be capable of sliding therein; a vacuum valve for controlling communication or blocking between the constant pressure chamber and the variable pressure chamber by the operation of the valve plunger; an atmosphere valve for controlling blocking or communication between the variable pressure chamber and at least the atmosphere; and an expandable and contractible boot provided between the rear shell and the input shaft, and is **characterized in that** the boot includes an accordion portion provided on the side of being connected to the rear shell so as to be expandable and contractible, a rear end portion provided continuously from the accordion portion toward the rear, a valve-body-side fixed portion provided between the accordion portion and the rear end portion of the boot, an input-shaft-side fixed portion provided at a rear end of the boot at a position rearwardly of the valve-body-side fixed portion, the valve-body-side fixed portion being fixed to or axially engaged with the valve body, the input-shaft-side fixed portion being fixed to the input shaft, and a predetermined number of atmosphere inlet ports formed at a portion of the boot between the valve-body-side fixed portion and the input-shaft-side fixed portion.

The negative pressure booster according to the present invention is **characterized in that** the boot is formed with the atmosphere inlet ports in the radial direction on a side surface between the valve-body-side fixed portion and the input-shaft-side fixed portion.

Furthermore, the negative pressure booster according to the invention of the present invention is **characterized in that** a filter storage portion is provided in the boot between the valve-body-side fixed portion and the input-shaft-side fixed portion, and the filter is stored in the filter storage portion.

Furthermore a brake booster according to the invention of the present invention is used in a brake system in a vehicle and includes a negative pressure booster configured to boost a pedal depressing force applied on a brake pedal and output the same, and is **characterized in that** the negative pressure booster is the negative pressure booster according to the preset invention.

According to the negative pressure booster in the present invention configured as described above, the valve-body-side fixed portion is provided on the rear end portion on the rear side of the accordion portion of the boot provided between the rear shell and the input shaft, the valve-body-side fixed portion is fixed to or axially engaged with the valve body, the input-shaft-side fixed portion provided at the rear end of the boot on the rear side of the valve-body-side fixed portion is fixed to the input shaft, and the boot portion is formed with a predetermined number of the atmosphere inlet ports between the valve-body-side fixed portion and the input-shaft-side fixed portion. Therefore, when the negative pressure booster is in operation, an elastically restoring force of the contracted accordion portion of the boot is supported by the valve body. Therefore, the boot portion between the valve-body-side fixed portion and the input-shaft-side fixed portion is not deformed, and hence the atmosphere inlet ports are prevented from being collapsed and deformed. Accordingly, turbulence of the flow of the atmosphere on the basis of the collapse and deformation of the atmosphere inlet ports is restrained when the atmosphere flows through the atmosphere inlet ports, so that the atmosphere is allowed to flow relatively smoothly through the atmosphere inlet ports. Therefore, restraint of the inflow noise generating when the atmosphere flows through the atmosphere inlet ports is achieved.

In particular, since the predetermined number of atmosphere inlet ports are formed in the radial direction on a cylindrical side surface portion of the boot between the valve-body-side fixed portion and the input-shaft-side fixed portion, deformation of the cylindrical side surface portion of the boot between the valve-body-side fixed portion and the input-shaft-side fixed portion due to the elastically restoring force of the accordion portion of the contracted boot hardly occurs when the negative pressure booster is in operation, so that the collapse and deformation of the atmosphere inlet ports may be restrained further effectively. Accordingly, the atmosphere is flowed through the atmosphere inlet ports more smoothly, and the inflow noise generated when the atmosphere flows through the atmosphere inlet ports is restrained further effectively.

Furthermore, since the collapse and deformation of the atmosphere inlet ports is restrained and the atmosphere is allowed to flow through the atmosphere inlet ports smoothly when the negative pressure booster is in operation, introduction of the atmosphere is further ensured. Accordingly, lowering of responsiveness due to the collapse and deformation of the atmosphere inlet ports is prevented.

Since the filter is stored in the boot between the valve-body-side fixed portion and the input-shaft-side fixed portion, the elastically restoring force of the accordion portion of the contracted boot is prevented from affecting on the filter when the negative pressure booster is in operation. Accordingly, deformation of the filter is restrained, and hence the contamination removing function of the filter is satisfactorily maintained.

In addition, since the resistance of the filter may be reduced, the atmosphere is allowed to flow smoothly in the filter. Then, since the atmosphere is allowed to flow smoothly through the atmosphere inlet ports and the filter in this manner, the responsiveness of the negative pressure booster is improved. In addition, since a noise reduction member (silencer) as in the related art is not necessary, the cost of the negative pressure booster may be reduced.

In contrast, according to the brake booster in the present invention, since the negative pressure booster which achieves prevention of generation of the inflow noise of the atmosphere more effectively is employed, the quietness in the cabin of the motor vehicle is achieved, so that the comfortableness of occupants in the cabin is improved.

### Brief Description of the Drawings

Fig. 1 is a partial cross-sectional view showing an example of embodiments of a negative pressure booster according to the present invention in a non-operating state.
Fig. 2 is a partially enlarged cross-sectional view of Fig. 1.

### Best Modes for Carrying Out the Invention

Referring now to the drawings, best modes for carrying out the present invention will be described.

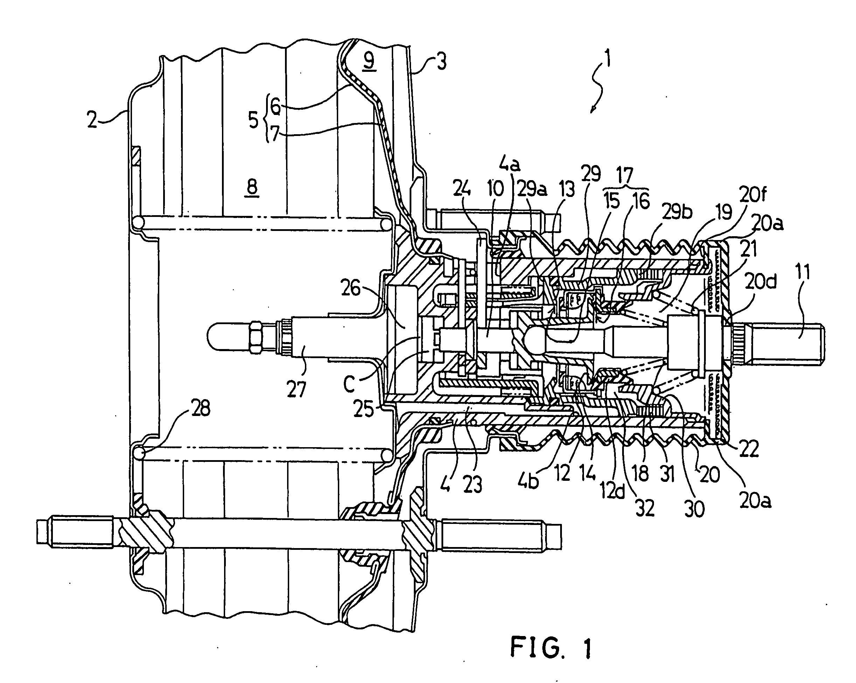

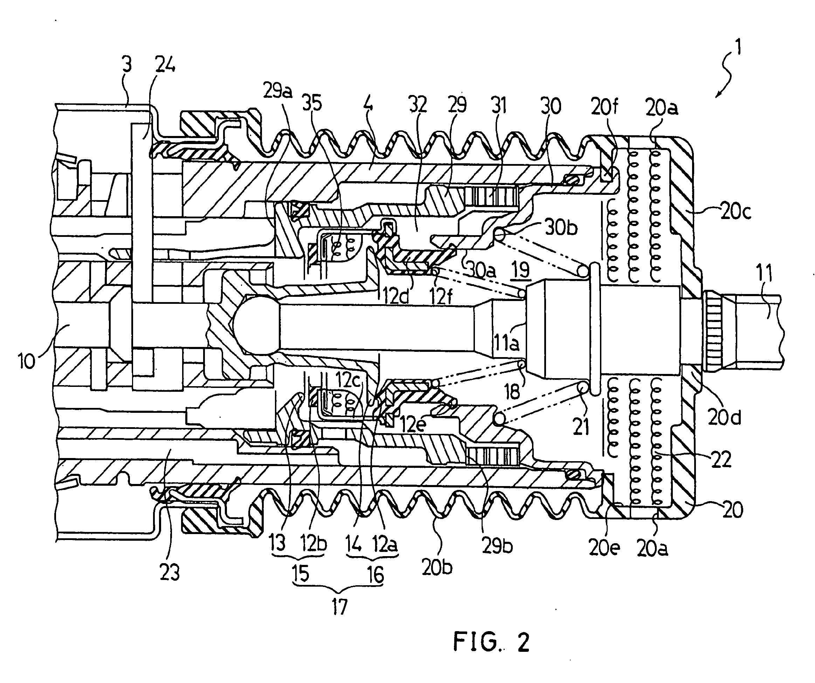

Fig. 1 is a partial cross-sectional view showing an example of embodiments of a negative pressure booster according to the present invention in a non-operating state, and Fig. 2 is a partially enlarged cross-sectional view of Fig. 1. In the description of the respective examples in the embodiments shown below, it is assumed that the negative pressure booster in the present invention is applied to a brake booster.

First of all, a portion of the negative pressure booster in this example having the same configuration as the negative pressure booster in the related art disclosed in JP-A-5-193485 will be briefly described.
In Fig. 1 and Fig. 2, reference numeral 1 designates a negative pressure booster, reference numeral 2 designates a front shell, reference numeral 3 designates a rear shell, reference numeral 4 designates a valve body, reference numeral 5 designates a power piston including a power piston member 6 mounted on the valve body 4 and a diaphragm 7 provided between the valve body 4 and the both shells 2, 3, reference numeral 8 designates a constant pressure chamber which is one of two chambers defined by sectionalizing a space in the both shells 2, 3 by the power piston 5 and being introduced with a negative pressure in a normal condition, reference numeral 9 designates a variable pressure chamber which is the other one of the two chambers described above, and being introduced with atmospheric pressure when the negative pressure booster 1 is in operation, reference numeral 10 designates a valve plunger, reference numeral 11 designates an input shaft being connected to an operating member such as a brake pedal, not shown, for controlling the operation of the valve plunger 10, reference numeral 12 designates a valve element being provided on the valve body 4 and having an atmosphere valve portion 12a, a vacuum valve portion 12b, reference numeral 13 designates an annular vacuum valve seat, reference numeral 14 designates an annular atmosphere valve seat formed on the valve plunger 10, reference numeral 15 designates a vacuum valve including the vacuum valve portion 12b and the vacuum valve seat 13, reference numeral 16 designates an atmosphere valve including the atmosphere valve portion 12a and the atmosphere valve seat 14, reference numeral 17 designates a control valve including the vacuum valve 15 and the atmosphere valve 16 disposed in series with respect to each other for controlling to selectively switch the variable pressure chamber 9 between the constant pressure chamber 8 and the atmosphere, reference numeral 18 designates a first valve control spring for constantly urging the valve element 12 in the direction to cause the vacuum valve portion 12b to seat on the vacuum valve seat 13, reference numeral 19 designates an atmosphere inlet passage formed in the valve body 4, reference numeral 20 designates a boot being provided between the rear shell 3 and the input shaft 11, reference numeral 21 designates a first return spring of the input shaft 11, reference numeral 23 designates a vacuum channel, reference numeral 24 designates a key member being inserted into a key hole 4a formed in the valve body 4 for restraining the relative movement of the valve plunger 10 with respect to the valve body 4 to a predetermined amount defined by the width of the key hole 4a in the axial direction and defining the respective limits of retraction of the valve body 4 and the valve plunger 10, reference numeral 25 designates a spacer member which constitutes part of reaction means, reference numeral 26 designates a reaction disc which constitutes the other portion of the reaction means, reference numeral 27 designates an output shaft, reference numeral 28 designates a second return spring for returning the power piston 5 and the valve body 4 to a non-operating position.

Subsequently, a configuration of the negative pressure booster 1 in this example, which is different from the negative pressure booster disclosed in JP-A-5-193485 will be described.
As shown in Fig. 1 and Fig. 2, the negative pressure booster 1 in this example is not provided with a noise reduction member (silencer) as in the related art in an atmosphere introducing portion of the valve body 4.
The valve element 12 is formed cylindrically and is provided on the valve body 4 (more specifically, a valve body auxiliary member 30 described later) slidably in an airtight manner, and includes the atmosphere valve portion 12a, the vacuum valve portion 12b, and a substantially cylindrical connecting member 12c which connects the same so as to be capable of moving integrally.

The negative pressure booster 1 in this example is fitted to an axial inner hole 4b of the valve body 4 so as to allow sliding motion of a cylindrical vacuum valve seat member 29. Then, the vacuum valve seat 13 described above is provided on the inner peripheral side at the rear end of the vacuum valve seat member 29. Therefore, the vacuum valve seat 13 is also movable relatively with respect to the valve body 4.

Then, a pressure in the variable pressure chamber 9 is applied constantly to a front end surface 29a of the vacuum valve seat member 29, and a pressure (negative pressure) of the constant pressure chamber 8 is constantly applied to a rear end surface 29b of the vacuum valve seat member 29. Therefore, when the pressure difference is generated between the pressure in the variable pressure chamber 9 and the pressure in the constant pressure chamber 8 when the negative pressure booster 1 is in operation, the force caused by this pressure difference is applied to the vacuum valve seat member 29 toward the rear.

The stepped cylindrical valve body auxiliary member 30 is fixedly fitted to the inner peripheral surface of the rear end portion of the valve body 4 so as not to be movable in the direction. A second valve control spring 31 is provided between the stepped portion of the outer peripheral surface of the valve body auxiliary member 30 and the rear end surface 29b of the vacuum valve seat member 29 in a compressed state. The second valve control spring 31 urges the vacuum valve seat member 29 constantly toward the front, and when the negative pressure booster 1 shown in Fig. 1 is in the non-operating state, the front end surface 29a of the vacuum valve seat member 29 comes into abutment with the stepped portion on the inner periphery of the valve body 4 and hence the vacuum valve seat member 29 is stopped with respect to the valve body 4.

As shown in Fig. 2, the atmosphere valve portion 12a of the valve element 12 is provided on a cylindrical atmosphere valve member 12d formed of an elastic material such as rubber, and an annular lip portion 12e is formed on the outer peripheral surface of the rear end portion of the atmosphere valve member 12d. The lip portion 12e is fitted in an inner peripheral surface 30a of the cylindrical portion at the front end of the valve body auxiliary member 30 slidably in an airtight manner. Therefore, a chamber 32 formed on the outer periphery of the atmosphere valve member 12d and the front end of the valve body auxiliary member 30 is constantly isolated from the atmosphere inlet passage 19 inside the valve body auxiliary member 30 in an airtight manner.

The first valve control spring 18 is provided between an inner peripheral stepped portion 12f of the atmosphere valve member 12d and an outer peripheral stepped portion 11a of the input shaft 11 in a compressed state. Therefore, the first valve control spring 18 constantly urges the atmosphere valve member 12d forward, in other words, in a direction in which the vacuum valve portion 12b is seated on the vacuum valve seat 13. The first return spring 21 is provided between an inner peripheral stepped portion 30b of the valve body auxiliary member 30 and a flange portion 11b of the input shaft 11 in a compressed state. Therefore, the first return spring 21 is constantly urges the input shaft 11 rearward.

The boot 20 disposed between the input shaft 11 and the rear shell 3 includes an accordion portion 20b formed between the rear end portion thereof and a mounting portion to the rear shell 3. The rear end portion of the boot 20 is formed into a cylindrical shape in U-shape in cross section having a bottom portion 20c formed of an annular flat panel fixed to the input shaft 11. An inner peripheral edge portion of a hole on the bottom portion 20c corresponds to an input-shaft-side fixed portion 20d which is fixed to the input shaft 11 in an airtight manner. Then, the cylindrical portion in U-shape in cross section at the rear end portion of the boot 20 corresponds to a filter storing portion 20e. A filter 22 formed of a soft filter material such as sponge for removing contamination such as dust contained in introduced atmosphere is stored in the filter storing portion 20e.

An annular flange is formed at the front end of the filter storing portion 20e, and the annular flange corresponds to a valve-body-side fixed portion 20f to be fixed to the valve body auxiliary member 30 fixed to the valve body 4. Then, the valve-body-side fixed portion 20f of the boot 20 is fixedly fitted to an annular recess of the valve body auxiliary member 30. In addition, a predetermined number of atmosphere inlet ports 20a are formed on a cylindrical side surface portion of the filter storing portion 20e in the radial direction at adequate pitches in the circumferential direction.

An annular filter 35 is provided on the inner peripheral surface of the cylindrical connecting member 12c of the valve element 12 and forwardly of the atmosphere valve 16. The filter 35 serves to remove the contamination such as dust contained in the atmosphere flowing through the opened atmosphere valve 16.
Other configurations of the negative pressure booster 1 in this example are substantially the same as that in JP-A-5-193485 described above.

In the negative pressure booster 1 configured as described above, when the input shaft 11 moves forward when the brake is operated, the valve plunger 10 moves forward in the same manner as the negative pressure booster 1 disclosed in JP-A-5-193485. Then, the valve element 12 also moves forward, and the vacuum valve portion 12b is seated on the vacuum valve seat 13 to close the vacuum valve 15, and the forward movement of the valve element 12 is stopped. Since the valve plunger 10 moves further forward, the atmosphere valve seat 14 moves away from the atmosphere valve portion 12a, so that the atmosphere valve 16 is opened.

Accordingly, the atmosphere which is already flowed in to the atmosphere inlet passage 19 in the valve body 4 flows through the atmosphere valve 16 and flows into the variable pressure chamber 9, and atmosphere out of the valve body 4 flows into the atmosphere inlet passage 19 in the valve body 4 through the atmosphere inlet ports 20a and the filter 22. The atmosphere flowed into the atmosphere inlet passage 19 also flows through the opened atmosphere valve 16 and flows into the variable pressure chamber 9.

Then, a pressure difference is generated between the variable pressure chamber 9 and the constant pressure chamber 8, and when the pressure difference is increased to a predetermined value, the power piston 5 is activated. Accordingly, the valve body 4 and the output shaft 27 move relatively forward with respect to the rear shell 3, and the negative pressure booster 1 outputs. At this time, by the relative forward movement of the valve body 4 with respect to the rear shell 3 causes the accordion portion 20b of the boot 20 to be contracted. However, even though the accordion portion 20b is contracted in this manner, the valve-body-side fixed portion 20f at the rear end portion of the boot is fixed to the valve body 4 (more specifically, to the valve body auxiliary member 30), the elastically restoring force of the accordion portion 20b is supported by the valve body 4 via the valve-body-side fixed portion 20f. Accordingly, the elastically restoring force of the accordion portion 20b does not affect the rear end portion of the boot at a position rearwardly of the valve-body-side fixed portion 20f. Therefore, the atmosphere inlet ports 20a at the rear end portion of the boot is not collapsed and deformed, so that the turbulent of the flow of the atmosphere rarely occurs when the atmosphere passes through the atmosphere inlet ports 20a. Consequently, generation of the inflow noise of the atmosphere is restrained when the atmosphere passes through the atmosphere inlet ports 20a.

Also, since the elastically restoring force of the accordion portion 20b is supported by the valve body 4, the filter 22 is not affected by the elastically restoring force of the accordion portion 20b. Therefore, the deformation of the filter 22 is restrained and the atmosphere is able to flow with little resistance when passing through the filter 22. Accordingly, the responsiveness of the negative pressure booster 1 is satisfactorily maintained. In addition, since the deformation of the filter 22 is restrained, a contamination removing function of the filter 22 is satisfactorily maintained as well.

When the valve body 4 moves forward by a predetermined amount, the atmosphere valve portion 12a is seated on the atmosphere valve seat 14, and the atmosphere valve 16 is closed. In an intermediate load condition in which the negative pressure booster 1 boosts an input to output, when the vacuum valve 15 and the atmosphere valve 16 are both closed, an output of the negative pressure booster 1 has a margin obtained by boosting the input by a predetermined servo ratio, so that the input and the output are well balanced.

Incidentally, the vacuum valve seat member 29 will be described briefly although it is not a characteristic part of the present invention.
When the atmosphere flows into the variable pressure chamber 9, it acts on the front end surface 29a of the vacuum valve seat member 29 of the variable pressure chamber 9 toward the rear. Therefore, by the pressure difference between the pressure in the variable pressure chamber 9 applied on the front end surface 29a of the vacuum valve seat member 29 and the pressure in the constant pressure chamber 8 applied on the rear end surface 29b of the vacuum valve seat member 29, a force to press the vacuum valve seat member 29 rearward is applied to the vacuum valve seat member 29. This force increases with increase in pressure in the variable pressure chamber 9.

Consequently, when the force which presses the vacuum valve seat member 29 is increased to a value larger than the sum of a spring load of the second valve control spring 32 and a spring load of the first valve control spring 18 of the valve element 12 at the same time, the vacuum valve seat member 29 moves relatively rearwardly together with the atmosphere valve member 12d with respect to the valve body 4 while pressing the vacuum valve portion 12b of the valve element 12. With the rearward movement of the vacuum valve seat member 29, the vacuum valve seat 13 protrudes rearward with respect to the position in a normal state. Therefore, in the intermediate load condition of the negative pressure booster 1, the balanced position of the control valve 17 where the vacuum valve 15 and the atmosphere valve 16 are both closed is moved relatively rearwardly with respect to the valve body 4. Accordingly, a stroke of the input shaft 11 is shortened by an amount of relative stroke of the vacuum valve seat member 29 with respect to the valve body 4.

Also, as described above, since the balanced position of the control valve 17 moves relatively rearward with respect to the valve body 4, a clearance C between the reaction disc 26 and the spacer member 25 is increased with the margin of the pressure in the variable pressure chamber 9. Accordingly, a jumping amount according to the increase in clearance causes the output of the negative pressure booster 1 to be increased with the increase of the pressure in the variable pressure chamber 9.
Other operations of the negative pressure booster 1 in this example are substantially the same as the negative pressure booster disclosed in JP-A-5-193485.

In this manner, according to the negative pressure booster 1 in this example, since the valve-body-side fixed portion 20f provided at the rear end portion at a position rearwardly of the accordion portion 20b of the boot 20, which is provided between the rear shell 3 and the input shaft 11, is fixed to the valve body 4, the input-shaft-side fixed portion 20d provided at the rear end of the boot 20 at a position rearwardly of the valve-body-side fixed portion 20f is fixed to the input shaft 11, and the predetermined number of atmosphere inlet ports 20a are formed in the radial direction on the cylindrical side surface portion of the boot 20 at a position between the valve-body-side fixed portion 20f and the input-shaft-side fixed portion 20d, the elastically restoring force of the accordion portion 20b of the contracted boot 20 is supported by the valve body 4 when the negative pressure booster 1 is in operation. Therefore, the cylindrical side surface portion of the boot 20 between the valve-body-side fixed portion 20f and the input-shaft-side fixed portion 20d is not deformed, and hence the atmosphere inlet ports 20a are prevented from being collapsed and deformed. Accordingly, turbulence of the flow of atmosphere is restrained when the atmosphere flows through the atmosphere inlet ports 20a, so that the atmosphere is allowed to flow relatively smoothly through the atmosphere inlet ports 20a. Therefore, restraint of the inflow noise generating when the atmosphere flows through the atmosphere inlet ports 20a is achieved.

Furthermore, since the collapse and deformation of the atmosphere inlet ports 20a is restrained and the atmosphere is allowed to flow through the atmosphere inlet ports 20a smoothly when the negative pressure booster 1 is in operation, introduction of the atmosphere is further ensured. Accordingly, lowering of responsiveness due to the collapse and deformation of the atmosphere inlet ports 20a is prevented.

Since the filter 22 is stored in the filter storing portion 20e provided in the boot 20 between the valve-body-side fixed portion 20f and the input-shaft-side fixed portion 20d, the elastically restoring force of the accordion portion 20b of the contracted boot 20 is prevented from affecting on the filter 22 when the negative pressure booster 1 is in operation. Accordingly, since the deformation of the filter 22 is prevented, and the filter 22 is stored in the boot 20 between the valve-body-side fixed portion 20f and the input-shaft-side fixed portion 20d, the elastically restoring force of the accordion portion 20b of the contracted boot 22 is prevented from affecting on the filter 22 when the negative pressure booster 1 is in operation. Accordingly, deformation of the filter 22 is restrained, and hence the contamination removing function of the filter 22 is satisfactorily maintained.

In addition, the resistance of the filter 22 may be reduced with respect to the flow of the atmosphere, and the atmosphere is allowed to flow smoothly in the filter 22. Then, since the atmosphere is allowed to flow smoothly through the atmosphere inlet ports 20a and the filter 22, the responsiveness of the negative pressure booster 1 is improved. In addition, since the noise reduction member (silencer) as in the related art is not necessary, the cost of the negative pressure booster 1 may be reduced.

Although the valve-body-side fixed portion 20f of the boot 20 is fixedly fitted into the annular recess formed on the valve body auxiliary member 30 in the example described above, the present invention may be configured in such a manner that an annular projection is formed on the outer peripheral surface of the valve body auxiliary member 30, and the front surface of the annular projection is engaged with the rear surface of the valve-body-side fixed portion 20f at the end thereof.

Also, although the predetermined number of atmosphere inlet ports 20a are formed on the cylindrical side surface portion of the filter storing portion 20e of the boot 20 in the radial direction in the example shown above, the predetermined number of atmosphere inlet ports 20a may be formed on the bottom portion 20c of the rear end portion of the boot 20 in the axial direction.

In addition, although the cylindrical vacuum valve seat member 29 is provided in the valve body 4, the vacuum valve seat member 29 is not necessarily required in the negative pressure booster 1 in the present invention, and may be omitted as the negative pressure booster disclosed in JP-A-5-193485. Although the vacuum valve 15 and the atmosphere valve 16 are provided in series in the axial direction in the example described above, the vacuum valve 15 and the atmosphere valve 16 do not necessarily have to be provided in series in the axial direction in the negative pressure booster 1 in the present invention. In other words, in the present invention, the vacuum valve 15 and the atmosphere valve 16 may be provided in an identical plane which is orthogonal to the axial direction of the valve body 4 as in the known negative pressure booster in the related art.

Furthermore, although the cylindrical valve body auxiliary member 30 is provided in the valve body 4 in the example described above, the valve body auxiliary member 30 may be omitted in the present invention.

In contrast, according to the brake booster in the present invention, since the negative pressure booster 1 which achieves prevention of generation of the inflow noise of the atmosphere more effectively is employed, the quietness in the cabin of the motor vehicle is achieved, so that the comfortableness of occupants in the cabin is improved.

### Industrial Applicability

A negative pressure booster according to the present invention is applicable to a negative pressure booster which generates a large output by boosting an input by a negative pressure at a predetermined servo ratio and, specifically, preferably applicable to a negative pressure booster in which quietness is required during operation.
A brake booster according to the present invention generates a large braking force by boosting a pedal depressing force by the negative pressure and is preferably applicable to a brake booster for a vehicle in which quietness in the cabin is required.

## Claims

1. A negative pressure booster (1) comprising:
an input shaft (11) which is applied with input;
a valve body (4) disposed so as to be capable of moving forward and backward with respect to the rear shell (3);
a power piston (5) provided in the valve body (4) for sectionalizing a space between a front shell (2) and the rear shell into a constant pressure chamber (8) in which a negative pressure is introduced, and a variable pressure chamber (9) in which the atmosphere is introduced during operation;
an output shaft (27) connected to the valve body (4) for outputting an output generated by the power piston (5) and being boosted from the input via the valve body (4);
a valve plunger (10) connected to the input shaft (11) and disposed in the valve body (4) so as to be capable of sliding therein;
a vacuum valve (12b) for controlling communication or blocking between the constant pressure chamber (8) and the variable pressure chamber (9) by the operation of the valve plunger (10);
an atmosphere valve (12a) for controlling blocking or communication between the variable pressure chamber (9) and at least the atmosphere; and
an expandable and contractible boot (20) provided between the rear shell (3) and the input shaft (11),
wherein the boot (20) includes an accordion portion (20b)provided on the side of being connected to the rear shell (3) so as to be expandable and contractible, and a rear end portion provided continuously from the accordion portion (20b) toward the rear,
**characterized in that**
a valve-body-side fixed portion (20f) is provided between the accordion portion (20b) and the rear end portion of the boot (20), an input-shaft-side fixed portion (20d) is provided at a rear end of the boot (20) at a position rearward of the valve-body-side fixed portion (20f), the valve-body-side fixed portion (20f) is fixed to or axially engaged with the valve body (4), and the input-shaft-side fixed portion (20d) is fixed to the input shaft (11), and
wherein a predetermined number of atmosphere inlet ports (20a) are formed at a portion of the boot (20) between the valve-body-side fixed portion (20f) and the input-shaft-side fixed portion (20d).

2. The negative pressure booster (1) according to claim 1, wherein the boot (20) is formed with the atmosphere inlet ports (20a) in the radial direction on a side surface between the valve-body-side fixed portion (20f) and the input-shaft-side fixed portion (20d).

3. The negative pressure booster (1) according to claim 1 or 2, wherein a filter storage portion (20e) is provided in the boot (20) between the valve-body-side fixed portion (20f) and the input-shaft-side fixed portion (20d), and the filter (22) is stored in the filter storage portion (20e).

4. A brake booster used in a brake system for a vehicle and including a negative pressure booster (1) configured to boost a pedal depressing force applied on a brake pedal and output the boosted force, wherein the negative pressure booster (1) is the negative pressure booster (1) according to any one of claims 1 to 3.

## Patentansprüche

1. Unterdruckverstärker (1), der umfasst:
eine Eingangswelle (11), die mit Eingangsenergie beaufschlagt wird;
einen Ventilkörper (4), der so angeordnet ist, dass er sich in Bezug auf das hintere Gehäuse (3) vorwärts und rückwärts bewegen kann;
einen Kraftkolben (5), der in dem Ventilkörper (4) vorgesehen ist, um einen Raum zwischen einem vorderen Gehäuse (2) und dem hinteren Gehäuse in eine Kammer (8) mit konstantem Druck, in der ein Unterdruck erzeugt wird, und eine Kammer (9) mit veränderlichem Druck, in die während des Betriebs Atmosphäre eingeleitet wird, zu unterteilen;
eine Ausgangswelle (27), die mit dem Ventilkörper (4) verbunden ist, um einen durch den Kraftkolben (5) erzeugten und mittels der Eingangsenergie durch den Ventilkörper (4) verstärkten Ausgang auszugeben;
einen Ventiltauchkolben (10), der mit der Eingangswelle (11) verbunden ist und in dem Ventilkörper (4) angeordnet ist, um darin gleiten zu können;
ein Unterdruckventil (12b), um die Kommunikation oder Sperrung zwischen der Kammer (8) mit konstantem Druck und der Kammer (9) mit veränderlichem Druck durch Betreiben des Ventiltauchkolbens (10) zu steuern;
ein Atmosphärenventil (12a) zum Steuern der Sperrung oder der Kommunikation zwischen der Kammer (9) mit veränderlichem Druck und zumindest der Atmosphäre; und
eine ausdehnbare und zusammenziehbare Haube (20), die zwischen dem hinteren Gehäuse (3) und der Eingangswelle (11) vorgesehen ist,
wobei die Haube (20) einen Akkordeonabschnitt (20b), der auf der Seite vorgesehen ist, auf der sie mit dem hinteren Gehäuse (3) verbunden ist, um ausdehnbar und zusammenziehbar zu sein, und einen hinteren Endabschnitt, der unterbrechungsfrei von dem Akkordeonabschnitt (20b) zur Rückseite vorgesehen ist, enthält,
**dadurch gekennzeichnet, dass**
ein fester Abschnitt (20f) auf Seiten des Ventilkörpers zwischen dem Akkordeonabschnitt (20b) und dem hinteren Endabschnitt der Haube (20) vorgesehen ist, ein fester Abschnitt (20d) auf Seiten der Eingangswelle an einem hinteren Ende der Haube (20) an einer Position hinter dem festen Abschnitt (20f) auf Seiten des Ventilkörpers vorgesehen ist, der feste Abschnitt (20f) auf Seiten des Ventilkörpers an dem Ventilkörper (4) befestigt ist oder damit axial in Eingriff ist und der feste Abschnitt (20d) auf Seiten der Eingangswelle an der Eingangswelle (11) befestigt ist und
eine vorgegebene Anzahl von Atmosphäreneinlassanschlüssen (20a) in einem Abschnitt der Haube (20) zwischen dem festen Abschnitt (20f) auf Seiten des Ventilkörpers und dem festen Abschnitt (20d) auf Seiten der Eingangswelle ausgebildet sind.

2. Unterdruckverstärker (1) nach Anspruch 1, wobei die Haube (20) mit den Atmosphäreneinlassanschlüssen (20a) in radialer Richtung auf einer seitlichen Oberfläche zwischen dem festen Abschnitt (20f) auf Seiten des Ventilkörpers und dem festen Abschnitt (20d) auf Seiten der Eingangswelle ausgebildet ist.

3. Unterdruckverstärker (1) nach Anspruch 1 oder 2, wobei ein Filteraufbewahrungsabschnitt (20e) in der Haube (20) zwischen dem festen Abschnitt (20f) auf Seiten des Ventilkörpers und dem festen Abschnitt (20d) auf Seiten der Eingangswelle vorgesehen ist und der Filter (22) in dem Filteraufbewahrungsabschnitt (20e) aufbewahrt ist.

4. Bremskraftverstärker, der in einem Bremssystem für ein Fahrzeug verwendet wird und einen Unterdruckverstärker (1) enthält, der konfiguriert ist, um eine Pedalniederdrückungskraft, die auf ein Bremspedal ausgeübt wird, zu verstärken und die verstärkte Kraft auszugeben, wobei der Unterdruckverstärker (1) der Unterdruckverstärker (1) nach einem der Ansprüche 1 bis 3 ist.

## Revendications

1. Surpresseur de pression négative (1) comprenant:
un arbre d'entrée (11) auquel on applique une pression d'entrée,
un corps de soupape (4) monté de façon à pouvoir se déplacer vers l'avant et vers l'arrière par rapport à un carter arrière (3),
un piston de puissance (5) monté dans le corps de soupape (4) pour compartimenter l'espace situé entre un carter avant (2) et le carter arrière en une chambre (8) à pression constante dans laquelle une pression négative est introduite, et une chambre (9) à pression variable dans laquelle la pression atmosphérique est introduite en cours d'opération,
un arbre de sortie (27) relié au corps de soupape (4) pour transmettre une pression de sortie générée par le piston de puissance (5) qui est augmentée par rapport à la pression d'entrée par le corps de soupape (4),
un piston plongeur de soupape (10) relié à l'arbre d'entrée (11) et monté dans le corps de soupape (4) pour pouvoir coulisser à sa partie interne,
une soupape de vide (12b) pour commander ou bloquer la communication entre la chambre à pression constante (8) et la chambre à pression variable (9) par actionnement du piston plongeur de soupape (10),
une soupape atmosphérique (12a) pour commander le blocage ou la communication entre la chambre à pression variable (9) et au moins l'atmosphère, et
un soufflet de protection expansible et contractible (20) monté entre le carter arrière (3) et l'arbre d'entrée (11),
ce soufflet de protection (20) comportant une partie en accordéon (20b) située du côté connecté au carter arrière (3) de façon à être expansible et contractible, et une partie d'extrémité arrière s'étendant en continue vers l'arrière à partir de la partie en accordéon (20b),
**caractérisé en ce que**
une partie (20f) fixée du côté du corps de soupape est montée entre la partie en accordéon (20b) et la partie d'extrémité arrière du soufflet de protection (20), une partie (20d) fixée du côté de l'arbre d'entrée est montée à l'extrémité arrière du soufflet de protection (20) à l'arrière de la partie (20f) fixée du côté du corps de soupape, la partie (20f) fixée du côté du corps de soupape est fixée à ou vient en prise axialement avec le corps de soupape (4) et la partie (20d) fixée du côté de l'arbre d'entrée est fixée à l'arbre d'entrée (11), et,
un nombre prédéfini d'orifices d'entrée de la pression atmosphérique (20a) étant formé sur la partie du soufflet de protection (20) située entre la partie (20f) fixée du côté du corps de soupape et la partie (20d) fixée du côté de l'arbre d'entrée.

2. Surpresseur de pression négative (1) conforme à la revendication 1, dans lequel le soufflet de protection (20) est réalisé de sorte que les orifices d'entrée de la pression atmosphérique (20a) soient situés en direction radiale sur une surface latérale entre la partie (20f) fixée du côté du corps de soupape et la partie (20d) fixée du côté de l'arbre d'entrée.

3. Surpresseur de pression négative (1) conforme à la revendication 1 ou 2, dans lequel une partie (20e) de stockage de filtration est montée dans le soufflet de protection (20) entre la partie (20f) fixée du côté du corps de soupape et la partie (20d) fixée du côté de l'arbre d'entrée, et un filtre (22) est logé dans la partie (20e) de stockage de filtration.

4. Servofrein utilisé dans un système de frein d'un véhicule et renfermant un surpresseur de pression négative (1) conformé pour augmenter la force de dépression appliquée à une pédale de frein et transférer la force augmentée, le surpresseur de pression négative (1) étant un surpresseur de pression négative (1) conforme à l'une quelconque des revendications 1 à 3.
